(19) Europäisches Patentamt
European Patent Office
Office européen des brevets

(11) Veröffentlichungsnummer: **0 096 787**
**B1**

(12) # EUROPÄISCHE PATENTSCHRIFT

(45) Veröffentlichungstag der Patentschrift: **29.01.86**

(51) Int. Cl.⁴: **A 01 N 43/64**, A 01 N 43/54

(21) Anmeldenummer: **83105314.5**

(22) Anmeldetag: **30.05.83**

(54) **Graswuchshemmende Mittel.**

(30) Priorität: **09.06.82 DE 3221700**

(43) Veröffentlichungstag der Anmeldung: **28.12.83 Patentblatt 83/52**

(45) Bekanntmachung des Hinweises auf die Patenterteilung: ***29.01.86 Patentblatt 86/5***

(84) Benannte Vertragsstaaten: **AT BE CH DE FR GB IT LI NL SE**

(56) Entgegenhaltungen:
**EP - A - 0 015 387**
**EP - A - 0 015 639**
**EP - A - 0 028 755**
**DE - A - 2 645 617**
**GB - A - 1 218 623**
**GB - A - 1 595 697**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Baron, Gerhard, Dr., Max-Beckmann-Strasse 71, D-5090 Leverkusen 1 (DE)**
Erfinder: **Lürssen, Klaus, Dr., August-Kierspel-Strasse 89, D-5060 Bergisch-Gladbach 2 (DE)**
Erfinder: **Niggemann, Johannes, Dr., Christian-Hess-Strasse 73, D-5090 Leverkusen 1 (DE)**
Erfinder: **Neumaier, Hermann, Dr., Kurlandweg 33, D-5653 Leichlingen (DE)**

**EP 0 096 787 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Wirkstoffkombinationen, die aus einem bekannten pflanzenwuchshemmenden Wirkstoff einerseits und aus bekannten Düngern andererseits bestehen und sehr gut zur Hemmung des Graswachstums geeignet sind.

Es ist bereits bekannt, dass zahlreiche Azol-Derivate pflanzenwuchsregulierende Eigenschaften besitzen und speziell zur Hemmung des Pflanzenwachstums eingesetzt werden können (vgl. DE-A 2 906 061 bzw. EP-A 0 015 387). So lässt sich zum Beispiel 1-Cyclohexyl-4,4-dimethyl-2-(1,2,4-triazol-1-yl)-pent-1-en-3-ol zur Hemmung des vegetativen Pflanzenwachstums, – unter anderem zur Hemmung des Graswachstums –, verwenden. Die Wirkung dieser Stoffe ist gut, jedoch setzt die Hemmwirkung in manchen Fällen relativ spät ein.

Weiterhin sind zahlreiche Düngemittel zur Versorgung von Pflanzen mit Mikro- und Makronährstoffen, insbesondere mit Stickstoff, bekannt. Bringt man derartige Dünger in grösseren Mengen auf die Pflanzen bzw. deren Lebensraum aus, so stehen die für ein gesundes Wachstum benötigten Nährstoffe den Pflanzen auch in höherem Masse zur Verfügung. Nachteilig ist aber, dass vor allem dann, wenn schnell wirkende Dünger in hoher Dosis appliziert werden, Überdüngungen eintreten können, die Schäden an den Pflanzen hervorrufen. Häufig setzt auch ein sehr starkes vegetatives Wachstum ein, was zum Beispiel im Falle von Zierrasen unerwünscht ist.

Schliesslich wird in der EP-A 0 015 387 in allgemeiner Form erwähnt, dass die dort gennanten Azol-Derivate auch in Mischung mit Pflanzennährstoffen (Düngemitteln) ausgebracht werden können. Spezielle Kombinationen aus einem bestimmten Azol-Derivat und einem Dünger werden allerdings nicht offenbart.

Es wurde nun gefunden, dass die neuen Wirkstoffkombinationen aus

A) einem Azol der Formel

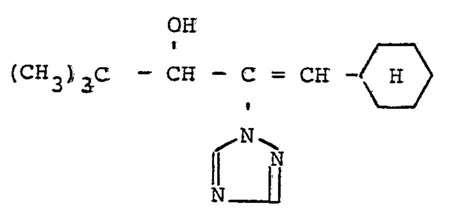 (I)

und

B) einem Phosphat-Dünger, Stickstoff-Dünger, schnell wirkenden Volldünger oder einem langsam wirkenden Volldünger auf Basis von Harnstoff-Aldehyd-Kondensaten

sehr gut zur Hemmung des Graswachstums geeignet sind.

Überraschenderweise üben die erfindungsgemässen Wirkstoffkombinationen bereits zu einem wesentlich früheren Zeitpunkt eine graswuchshemmende Wirkung aus als Wuchshemmer der Formel (I) und oben genannte Dünger bei zeitlich versetzter separater Ausbringung der Komponenten. Ein derartiger Effekt konnte unter Berücksichtigung der technischen Lehre, die aus der EP-A 0 015 387 hervorgeht, nicht erwartet werden. Im übrigen zeigen die Graspflanzen gegenüber den erfindungsgemässen Wirkstoffkombinationen auch eine deutlich bessere Verträglichkeit als gegenüber den einzelnen Komponenten. Es liegt also nicht nur eine Wirkungsergänzung, sondern auch ein nicht vorhersehbarer Effekt vor.

Mit Hilfe der erfindungsgemässen Wirkstoffkombinationen kann den Graspflanzen eine grössere Menge an Nährstoffen, insbesondere an Stickstoff, zugeführt werden als bei separater Düngerapplikation, und zwar ohne dass die Graspflanzen durch Überdüngung geschädigt werden. Vorteilhaft ist ausserdem, dass bei Anwendung der erfindungsgemässen Wirkstoffkombinationen ein häufig unerwünschtes übergrosses vegetatives Graswachstum trotz der relativ hohen Düngerdosis nicht eintritt. Die Graspflanzen zeichnen sich durch einen gesunden, kräftigen Wuchs und durch eine intensive dunkelgrüne Färbung aus. Ausserdem wird eine deutlich dichtere Grasnarbe (stärkere Bestockung) erzielt als bei separater Ausbringung der einzelnen Komponenten. Auch diese Wirkung konnte im Hinblick auf den vorbekannten Stand der Technik nicht erwartet werden.

Das in den erfindungsgemässen Wirkstoffkombinationen enthaltene Azol der Formel (I) ist bereits bekannt (vgl. DE-OS 2 906 061 bzw. EP-A 0 015 387).

Als Dünger sind in den erfindungsgemässen Wirkstoffkombinationen enthalten:

– Phosphat-Dünger, wie Superphosphat (primäres Calciumphosphat und Gips), Doppelsuperphosphat (primäres Calciumphosphat), Rhenaniaphosphat® (Calcium-natriumphosphat und Calciumsilikat); Thomasmehl, Phosphorit, Leunaphos® (Mischung von Ammoniumsulfat und Diammoniumphosphat), Nitrophoska® (Mischung von Ammoniumsulfat bzw. Chlorid, Diammoniumphosphat und Kaliumnitrat) und Hakaphos® (Mischung von Harnstoff, Kaliumnitrat und Diammoniumphosphat);

– Stickstoff-Dünger, wie Ammoniumsulfat, Kalkstickstoff, Kaliumnitrat, Ammoniumnitrat, Harnstoff und Harnstoff-Formaldehydkondensate, wobei Ureaform®, Isobutyliden-diharnstoff und Crotonylidendiharnstoff (Floranid®) beispielhaft genannt seien;

– schnell wirkende Volldünger, wie Gartendünger, die z.B. 12% N, 12% $P_2O_5$, 17% $K_2O$, 2% MgO, 0,1% B, 0,1% Mn und 0,02% Zn enthalten, oder für Blumen und Zierpflanzen geeignete Spezialdünger, die z.B. 16% N (Harnstoff und Ammonium-Stickstoff), 8% $P_2O_5$, 16% $K_2O$, 1% MgO, 0,1% B, 0,04% Cu, 0,1% Mn und 0,02% Zn enthalten;

– langsam wirkende Volldünger auf Basis von Harnstoff-Formaldehyd- bzw. anderen Harnstoff-Aldehyd-Kondensaten, wie Rasendünger mit Langzeitwirkung, die z.B. 20% N (als Harnstoff-Formaldehyd- bzw. Harnstoff-Isobutyraldehyd-Kondensat), 5% $P_2O_5$, 8% $K_2O$, 2% MgO, 0,4% Fe, 0,1% Mn und 0,02% Zn enthalten, oder die z.B. 27% N, 7% $P_2O_5$, 7% $K_2O$ und 1% MgO enthalten, oder die z.B. 34% N, 5% $P_2O_5$ und 5% $K_2O$ enthalten, ferner Depot-Rasendünger mit Dosierumhüllung, die z.B. 20% N, 5% $P_2O_5$, 5% $K_2O$ und 1% MgO enthalten, ausserdem Langzeitdünger mit Dosiermembran aus verharzten Pflanzenölen, wobei die Dünger z.B. 15% N, 12% $P_2O_5$ und 15% $K_2O$ oder z.B. 16% N, 10% $P_2O_5$ und 13% $K_2O$ enthalten, darüber hinaus Langzeitdünger, die z.B. 20,5% N (15% als Crotonyliden-diharnstoff, 2,3% als Harnstoff, 0,4% als Ammoniumsalz und 2,8% Nitrat), 10% $P_2O_5$ (2% als Monoammonium-phosphat und 8% als Kalium-magnesium-phosphat), 15% $K_2O$ (9,8% als Kaliumnitrat und 5,2% als Kalium-magnesium-phosphat), 6% MgO (1,4% als Magnesit und 4,6% als Kalium-magnesium-phosphat), 0,05% Fe, 0,025% B, 0,1% Mn, 0,04% Cu, und 0,05% Mo enthalten, und schliesslich Stickstoff-Depot, Dünger, die z.B. 15% N (davon 6% als Isobutyliden-diharnstoff), 9% $P_2O_5$, 15% $K_2O$, 2% MgO, 0,3% Fe, 0,1% Mn und 0,02% Zn enthalten.

In den Düngern, die in den erfindungsgemässen Wirkstoffkombinationen enthalten sind, können alle zur Pflanzenernährung wichtigen Makronährstoffe und Mikronährstoffe vorhanden sein. Als Makronährstoffelemente seien Stickstoff, Phosphor, Kalium, Calcium, Magnesium und Schwefel genannt. Als Mikronährstoff-Elemente seien Eisen, Mangan, Zink, Kupfer, Bor, Molybdän, Natrium, Cobalt, Silizium, Aluminium, Vanadin, Nikkel und Titan genannt.

Wenn die Wirkstoffe der Gruppen A und B in den erfindungsgemässen Wirkstoffkombinationen in bestimmten Verhältnissen vorliegen, zeigt sich der wuchshemmende Effekt besonders deutlich. Jedoch können die Gewichtsverhältnisse von Wuchshemmer zu Düngern in den erfindungsgemässen Wirkstoffkombinationen in relativ grossen Bereichen variiert werden. Im allgemeinen entfallen auf 1 Gewichtsteil an dem unter A) genannten Wuchshemmer der Formel (I) 2 bis 1500 Gewichtsteile, vorzugsweise 5 bis 1000 Gewichtsteile, an einem unter B) aufgeführten Dünger.

Die erfindungsgemässen Wirkstoffkombinationen zeigen eine starke graswuchshemmende Wirksamkeit.

Bei der Graswuchshemmung lässt sich der wuchshemmende Effekt der erfindungsgemässen Wirkstoffkombinationen vorteilhaft nutzen. So kann zum Beispiel die Häufigkeit der Grasschnitte in Ziergärten, Park- und Sportanlagen, auf Golfplätzen, Flugplätzen oder an Strassenrändern reduziert werden.

Die Wirkstoffkombinationen können in die üblichen Formulierungen übergeführt werden, wie Lösungen, Emulsionen, Suspensionen, Pulver und Granulate.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

Z.B. natürliche Gesteinsmehle, wie Kaoline, Tonerden, Talkum, Kreide, Quarz, Atapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgiermittel kommen in Frage:

z.B. nichtionogene und anionische Emulgatoren, wie Polyoxyethylen-Fettsäure-Ester, Polyoxyethylen-Fettalkohol-Ether, z.B. Alkylarylpolyglykol-ether, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, Ligninsulfonate, natürliche und synthetische pulverige, körnige oder latexförmige Polymere verwendet werden, wie Gummiarabicum, Polyvinylalkohol, Polyvinylacetat und Polyvinylpyrrolidon.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe verwendet werden.

Die Formulierungen enthalten im allgemeinen zwischen 0,1 und 95 Gewichtsprozent an Wirkstoffen, vorzugsweise zwischen 0,5 und 90%.

Die erfindungsgemässen Wirkstoffkombinationen können in den Formulierungen in Mischung mit anderen bekannten Wirkstoffen vorliegen, wie Fungizide, Insektizide, Akarizide und Herbizide.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Giessen, Verspritzen, Versprühen, Verstreuen.

Die Wirkstoffkonzentrationen können in einem grösseren Bereich variiert werden. Im allgemeinen verwendet man pro Hektar Bodenfläche 10 bis 800 kg an Wirkstoffen (Wuchshemmer und Dünger), vorzugsweise 50 bis 500 kg an Wirkstoffen.

Für die Anwendungszeit gilt, dass die Anwendung der Wirkstoffkombinationen in einem bevorzugten Zeitraum vorgenommen wird, dessen genaue Abgrenzung sich nach den klimatischen und vegetativen Gegebenheiten richtet.

Die gute graswuchshemmende Wirkung der erfindungsgemässen Wirkstoffkombinationen geht aus den nachfolgenden Beispielen hervor.

*Formulierungsbeispiele*

*Beispiel 1*

Zur Herstellung eines Spritzpulvers werden 70 Gewichtsteile an Wirkstoff der Formel

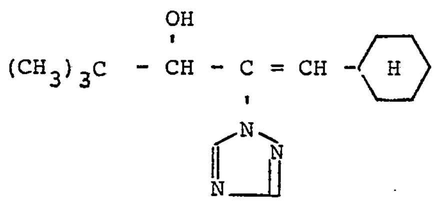 (I)

2 Gewichtsteile oberflächenaktives Mittel (Netzmittel),
3 Gewichtsteile Dispergiermittel auf Basis von Ligninsulfonat,
5 Gewichtsteile Kondensationsprodukt aus Cyclohexanon, Formaldehyd und Natriumbisulfit,
5 Gewichtsteile hochdisperse Kieselsäure und
15 Gewichtsteile Kaolin (Füllstoff),
in einem Mischer intensiv gemischt und anschliessend in einer Luftstrahlmühle fein gemahlen.

*Beispiel 2*

Zur Herstellung eines Granulates werden
5 Gewichtsteile an Wirkstoff der Formel

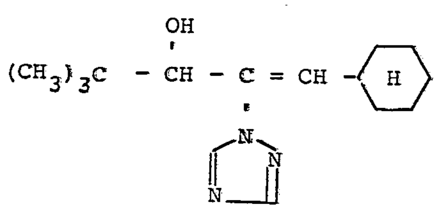 (I),

93,8 Gewichtsteile an Crotonyliden-diharnstoff-Dünger («Floranid»®)
und
1,2 Gewichtsteile an Polyvinylalkohol (Kleber)
verwendet.

Im einzelnen verfährt man bei der Herstellung des Granulates in der Weise, dass man zunächst den Düngeranteil in einem Mischer ohne reibende Elemente vorlegt und während des Mischens eine wässerige Polyvinylalkohol-Lösung, welche die oben angegebene Menge an Polyvinylalkoholkleber enthält, aufsprüht. Nach der gleichmässigen Verteilung auf der Düngeroberfläche werden 7,14 Gewichtsteile Spritzpulver gemäss Beispiel 1 (Gehalt an Wirkstoff der Formel (I): 5 Gewichtsteile) in den Mischer gegeben. Nach einer Mischzeit von 15 Minuten wird das Granulat bei laufendem Mischer bei einer Temperatur von 60° C getrocknet. Es entsteht ein abriebfestes Granulat, das die Wirkstoffe bei Anwendung in Gegenwart von Wasser abgibt.

*Beispiel 3*

Zur Herstellung eines Granulates werden
3 Gewichtsteile an Wirkstoff der Formel

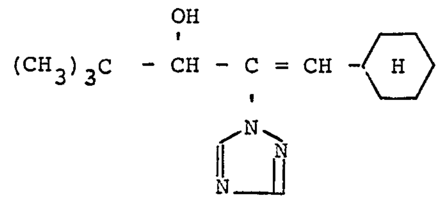 (I)

96,1 Gewichtsteile an «Nitrophoska Blau®» (NPK-Dünger), der 12% N (in Form von Ammonium-Salzen und Nitraten), 12% $P_2O_5$ (in Form von Calcium- und Ammoniumphosphaten), 17% $K_2O$ (in Form von Kaliumchlorid und Kaliumsulfat), 2% MgO, 0,1% Mn und 0,02% Zn enthält, und
0,9 Gewichtsteile Polyvinylacetat
verwendet.

Im einzelnen verfährt man bei der Herstellung des Granulates in der Weise, dass man zunächst den Düngeranteil in einem Mischer ohne reibende Elemente vorlegt und während des Mischens eine wässerige Polyvinylacetat-Kleber-Lösung, welche die oben angegebene Menge an Polyvinylacetat-Kleber enthält, aufsprüht. Nach der gleichmässigen Verteilung des Klebers auf der Düngeroberfläche werden 4,29 Gewichtsteile an Spritzpulver gemäss Beispiel 1 (Gehalt an Wirkstoff der Formel (I): 3 Gewichtsteile) in den Mischer gegeben. Nach einer Mischzeit von 15 Minuten wird das Granulat bei laufendem Mischer bei einer Temperatur von 60° C getrocknet. Es entsteht ein abriebfestes Granulat mit einer relativ stabilen Hüllschicht. Das Granulat gibt die Wirkstoffe bei Anwendung in Gegenwart von Wasser allmählich ab.

*Beispiel A*

*Wuchshemmung bei Gras (Rasen)/Freiland*

Jeweils 10 $m^2$ grosse Rasenparzellen, auf denen das Gras (Mischung: Berliner Tiergarten) 3 Tage nach dem Schneiden eine Wuchshöhe von 4 cm aufweist, werden

a) weder mit wuchshemmendem Wirkstoff noch mit einem Dünger behandelt,

b) mit der jeweils gewünschten Menge an einer Wirkstoffzubereitung besprüht, die den wuchshemmenden Wirkstoff der Formel (I) in einer Konzentration von 0,3 Gewichtsprozent enthält, und die durch Vermischen der benötigten Menge an Spritzpulver gemäss Beispiel 1 mit Wasser hergestellt wird,

c) mit der jeweils gewünschten Menge an Crotonyliden-diharnstoff-Dünger («Floranid®») bestreut,

d) zunächst mit der jeweils gewünschten Mengen an Crotonyliden-diharnstoff-Dünger bestreut und anschliessend mit der jeweils gewünschten Menge an der unter b) beschriebenen Wirkstoffzubereitung besprüht,
und

e) mit der jeweils gewünschten Menge an Granulat gemäss Beispiel 2 bestreut.

Nach den Behandlungen werden die Rasenflächen mit Wasser in einer Menge von 10 mm beregnet. In verschiedenen Zeitabständen wird auf allen Parzellen der Zuwachs gemessen.

Wirkstoffe, Wirkstoffmengen und Versuchsergebnisse gehen aus der folgenden Tabelle hervor.

*Tabelle A*

*Wuchshemmung bei Gras (Rasen)/Freiland*

| Wirkstoff bzw. Wirkstoff-kombination | Aufwandmenge an Wirkstoff | Zuwachs (cm) nach Tagen | | | |
|---|---|---|---|---|---|
| | | 15 | 32 | 52 | 59 |
| — (Kontrolle) | — | 3,0 | 4,0 | 5,0 | 6,0 |
| (I) | 1,5 kg/ha | 1,6 | 2,0 | 5,0 | 6,0 |
| Floranid®-Dünger | 30 g/m² | 4,0 | 9,6 | 17,0 | 18,0 |
| Floranid®-Dünger* + (I) | 30 g/m² 1,5 kg/ha | 3,0 | 5,0 | 14,0 | 14,0 |
| Floranid®-Dünger** + (I) | 30 g/m² 1,5 kg/ha | 2,6 | 4,0 | 10,0 | 11,0 |

* = separate Ausbringung der Komponenten, wie unter (d) beschrieben
** = gemeinsame Ausbringung der Komponenten, wie unter (e) beschrieben

*Beispiel B*

*Wuchshemmung bei Gras (Rasen)/Freiland*

Jeweils 10 m² grosse Rasenparzellen, auf denen das Gras (Mischung: Berliner Tiergarten) 3 Tage nach dem Schneiden eine Wuchshöhe von 4 cm aufweist, werden

a) weder mit wuchshemmendem Wirkstoff noch mit einem Dünger behandelt,

b) mit der jeweils gewünschten Menge an einer Wirkstoffzubereitung besprüht, die den wuchshemmenden Wirkstoff der Formel (I) in einer Konzentration von 0,3 Gewichtsprozent enthält, und die durch Vermischen der benötigten Menge an Spritzpulver gemäss Beispiel 1 mit Wasser hergestellt wird,

c) mit der jeweils gewünschten Menge an «Nitrophoska Blau®»-Dünger (vgl. Beispiel 3) bestreut,

d) zunächst mit der jeweils gewünschten Mengen an «Nitrophoska Blau®»-Dünger bestreut und anschliessend mit der jeweils gewünschten Menge an der unter b) beschriebenen Wirkstoffzubereitung besprüht,
und

e) mit der jeweils gewünschten Menge an Granulat gemäss Beispiel 3 bestreut.

Nach den Behandlungen werden die Rasenflächen mit Wasser in einer Menge von 10 mm beregnet. In verschiedenen Zeitabständen wird auf allen Parzellen der Zuwachs gemessen.

Wirkstoffe, Wirkstoffmengen und Versuchsergebnisse gehen aus der folgenden Tabelle hervor.

*(Tabelle auf der nächsten Seite)*

**Patentansprüche**

1) Mittel zur Hemmung des Graswachstums, gekennzeichnet durch einen Gehalt an einer Wirkstoffkombination, bestehend aus

A) einem Azol der Formel

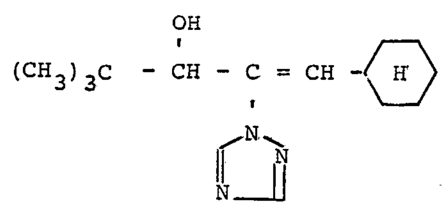

(I)

und

B) einem Phosphat-Dünger, Stickstoff-Dünger, schnell wirkenden Volldünger oder einem langsam wirkenden Volldünger auf Basis von Harnstoff-Aldehyd-Kondensaten.

2) Mittel gemäss Anspruch 1, dadurch gekennzeichnet, dass in der Wirkstoffkombination das Gewichtsverhältnis von dem unter (A) aufgeführten Azol zu einem unter (B) aufgeführten Dünger zwischen 1:2 und 1:1500, vorzugsweise zwischen 1:5 und 1:1000 liegt.

3) Verfahren zur Hemmung des Graswachstums, dadurch gekennzeichnet, dass man Wirkstoffkombinationen gemäss Anspruch 1 oder 2 auf Graspflanzen und/oder deren Lebensraum einwirken lässt.

4) Verwendung von Wirkstoffkombinationen gemäss Anspruch 1 oder 2 zur Hemmung des Graswachstums.

5) Verfahren zur Herstellung von Mitteln zur Hemmung des Graswachstums, dadurch gekenn-

*Tabelle B*

*Wuchshemmung bei Gras (Rasen)/Freiland*

| Wirkstoff bzw. Wirkstoff-kombination | Aufwandmenge an Wirkstoff | Zuwachs (cm) nach Tagen | | | |
|---|---|---|---|---|---|
| | | 15 | 32 | 52 | 59 |
| — (Kontrolle) | — | 3,0 | 4,0 | 5,0 | 6,0 |
| (I) | 1,5 kg/ha | 1,6 | 2,0 | 5,0 | 6,0 |
| Nitrophoska Blau® | 30 g/m² | 3,6 | 7,0 | 13,0 | 13,2 |
| Nitrophoska Blau®* + (I) | 30 g/m² 1,5 kg/ha | 2,2 | 4,4 | 9,4 | 10,0 |
| Nitrophoska Blau®** + (I) | 30 g/m² 1,5 kg/ha | 2,0 | 2,4 | 6,0 | 7,0 |

* = separate Ausbringung der Komponenten, wie unter (d) beschrieben
** = gemeinsame Ausbringung der Komponenten, wie unter (e) beschrieben

zeichnet, dass man Wirkstoffkombinationen gemäss Anspruch 1 oder 2 mit Streckmitteln und/oder oberflächenaktiven Stoffen vermischt.

**Revendications**

1. Composition pour inhiber la croissance du gazon, caractérisée par une teneur en une association de substances actives comprenant

A) un azole de formule

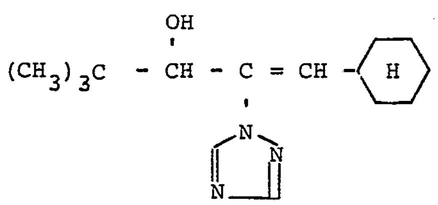

(I)

et

B) un engrais phosphaté, un engrais azoté, un engrais complet à action rapide ou un engrais complet à action lente à base de produits de condensation urée-aldéhyde.

2. Composition suivant la revendication 1, caractérisée en ce que dans l'association de substances actives, le rapport en poids de l'azole indiqué en (A) à un engrais indiqué en (B) se situe entre 1:2 et 1:1500, de préférence entre 1:5 et 1:1000.

3. Procédé pour inhiber la croissance du gazon, caractérisé en ce qu'on fait agir sur des graminées et/ou sur leur milieu des associations de substances actives suivant la revendication 1 ou 2.

4. Utilisation d'associations de substances actives suivant la revendication 1 ou 2 pour inhiber la croissance du gazon.

5. Procédé de préparation de compositions pour inhiber la croissance du gazon, caractérisé en ce qu'on mélange des associations de substances actives suivant la revendication 1 ou 2 avec des diluants et/ou des agents tensio-actifs.

**Claims**

1) Agents for inhibiting growth of grass, characterised in that they contain an active compound combination consisting of

A) an azole of the formula

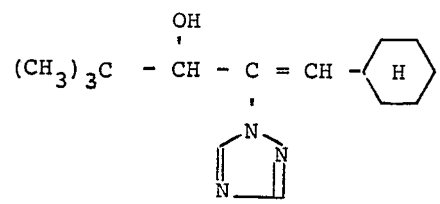

(I)

and

B) a phosphate fertiliser, nitrogen fertiliser, fast-release compound fertiliser or a slow-release compound fertiliser based on urea/aldehyde condensates.

2) Agents according to Claim 1, characterised in that the weight ratio of the azole mentioned under (A) to a fertiliser mentioned under (B) in the active compound combination is between 1:2 and 1:1,500, preferably between 1:5 and 1:1,000.

3) Process for inhibiting growth of grass, characterised in that active compound combinations according to Claim 1 or 2 are allowed to act on grass plants and/or their environment.

4) Use of active compound combinations according to Claim 1 or 2 for inhibiting growth of grass.

5) Process for the preparation of agents for inhibiting growth of grass, characterised in that active compound combinations according to Claim 1 or 2 are mixed with extenders and/or surface-active agents.